# EUROPEAN PATENT APPLICATION

(11) **EP 3 483 754 A1**
(43) Date of publication of application: **15.05.2019**
(21) Application number: 17201429.2
(22) Date of filing: 13.11.2017
(51) Int. Cl.: G06F 17/50

(54) **METHOD FOR SELECTING COMPONENT PARTS FOR A DISPLAY SYSTEM, A DISPLAY SYSTEM AND A COMPUTER PROGRAM**

(71) Applicant: Vestel Elektronik Sanayi ve Ticaret A.S., 45030 Manisa (TR); Ozyegin Universitesi, 34794 Istanbul (TR)
(72) Inventor: ÖZTURK, Utku, 45030 Manisa (TR); KOYUN, Mert, 45030 Manisa (TR); YILMAZ, Görkem, 45030 Manisa (TR)
(74) Representative: Thomas, Michael Andrew

(57) **Abstract**

There is provided a method for selecting component parts for the manufacture of at least a part of a display system. Each component part has one or more features relating to operation of the at least a part of a display system. In the method: (i) values are firstly defined for parameters representing the one or more features; (ii) one or more constraints are defined relating to an objective to be achieved by a selected combination; (iii) one or more constraints are defined limiting the selection of a combination of two or more component parts; and (iv) a linear programming algorithm is applied to select a combination of parameter values satisfying the defined constraints. A display system may then be assembled from component parts represented by the selected combination of parameter values at (iv). A display system is also provided having a combination of component parts so selected.

## Description

### Technical Field

The present disclosure relates to a method for selecting component parts for a display system, a display system and a computer program.

### Background

Various techniques are known for designing backlight arrangements for displays, for example. In one example technique, known to be used in designing TV displays, optical design tools are used comprising computer-implemented simulation programs. Such tools are able to show how a selected optical structure will perform, but they are not able to propose an optical structure which might achieve a required level of performance. A designer is required to make the selection of an optical structure from available components as an input to the process.

### Summary

According to a first aspect disclosed herein, there is provided a method for selecting a combination of component parts for the manufacture of at least a part of a display system, each component part having one or more features relating to operation of the at least a part of a display system, the method comprising:
(i) defining values for parameters representing the one or more features of each component part;
(ii) defining one or more constraints relating to an objective to be achieved by a combination of component parts selected from respective sets of available component parts;
(iii) defining one or more constraints limiting the selection of a combination of two or more component parts; and
(iv) applying a linear programming algorithm to select a combination of parameter values satisfying the defined constraints, the selected parameter values representing a desired combination of component parts for the at least a part of a display system.

By this method, combinations of available component parts may be selected and evaluated against two different types of constraint: one taking account of an overall objective to be achieved by a selected combination of available component parts; and another taking account of undesirable or incompatible combinations of two or more parts which may, in part, reflectors a designer's experience. In this way, a feasible and desirable combination of component parts may be selected for use in assembling a display or at least a part of a display.

In an example, at (ii), the one or more constraints are defined as a function of one or more parameters defined at (i). That is, a contribution to the overall objective by a particular choice of component parts may be assessed on the basis of parameter values already defined to represent and differentiate features of component parts.

In an example, at (ii), the one or more constraints are defined as one or more respective threshold values. For example, an overall objective may be defined in terms of a limit, being a maximum or a minimum for example, which may be achieved by one or more combinations of parameter values and hence of component parts.

In an example, at (iii), the one or more constraints define respective incompatibilities relating to the selection of one component part to work with another component part. In this way, infeasible combinations of component parts are not offered as potential solutions to the selection problem.

In an example, the one or more constraints are defined in the form of an availability table indicating valid and invalid combinations of values for two or more of the parameters defined at (i). An availability table may express the compatibility or desirability of two or more component parts in terms of compatible ranges of parameter values or in terms of discrete combinations of parameter values.

In an example, at (iv), the linear programming algorithm is a mixed integer linear programming (MILP) algorithm.

In an example, the method comprises:
(v) mapping a selected combination of parameter values from (iv) to the respective sets of available component parts to identify one or more combinations of component parts satisfying the one or more constraints defined at (ii).

There may be more than one component part in a set of available component parts of a particular type having the same parameter value assigned to represent a feature provided by that component part. Each such component part, if represented by the selected parameter value, is therefore a potential candidate for selection.

In an example application of the method, the at least a part of the display is a backlight unit for a liquid crystal device (LCD) display panel and wherein the one or more constraints defined at (ii) define an overall luminance level to be achieved by the combination of the backlight unit and the LCD display panel.

In an example extension, the method comprises:
(vi) assembling a combination of component parts identified at (v).

According to a second aspect disclosed herein, there is provided a display system, comprising a combination of component parts selected from respective sets of available component parts, the display system having a predetermined level of performance defined in terms of one or more operating parameters of the display system, each component part being represented by one or more parameter values defining features relating to operation of the display, wherein the combination of component parts is selected from the respective sets by:
(a) defining one or more constraints relating to the predetermined level of performance to be achieved by the selected combination of component parts;
(b) defining one or more constraints limiting the selection of a combination of two or more component parts; and
(c) applying a linear programming algorithm to select a combination of parameter values satisfying the defined constraints, the selected parameter values representing a combination of component parts for the display system achieving the predetermined level of performance.

A display system assembled in this way has the benefit not only of achieving predetermined requirements relating to performance of the display, but also the benefit of having taken into account a range of available options for the selection of the components eventually used and a knowledge that the combination selected did not omit an opportunity for improvement.

In an example of the display system, at (b), the one or more constraints define respective incompatibilities relating to the selection of one component part to work with another component part. Optionally, at (b), the one or more constraints are defined in the form of an availability table indicating valid and invalid combinations of values for the parameters representing the two or more component parts.

In an example of the display system, a selected combination of parameter values from (c) is mapped to the respective sets of available component parts to identify one or more combinations of component parts satisfying the predetermined level of performance for the display system when assembled. This enables a final selection to be made from any one variant of a component part that satisfies the parameter values needed for inclusion in the overall combination of parts for the display system.

In an example the display system comprises a backlight unit for illuminating a liquid crystal device (LCD) display panel and the predetermined level of performance comprises achievement of a predetermined level of display luminance to be achieved by the combination of the backlight unit and the LCD display panel.

According to a third aspect disclosed herein, there is provided a computer program which when loaded into and executed by a digital processor causes the digital processor to implement the method as described above according to the first aspect disclosed herein.

### Brief Description of the Drawings

To assist understanding of the present disclosure and to show how embodiments may be put into effect, reference is made by way of example to the accompanying drawings in which:
Figure 1 shows schematically a simplified example section view of a part of a known LCD display having a direct light backlight arrangement;
Figure 2 shows schematically a simplified example section view of a part of a known LCD display having an edge-lit backlight arrangement;
Figure 3 shows a simplified example of a structure of available component parts for an LCD display from which a selection may be made by an example technique disclosed herein; and
Figure 4 shows a simplified example procedure to be followed in applying an optimisation algorithm to the selection of component parts for a backlight arrangement of an LCD display according to an example technique disclosed herein.

### Detailed Description

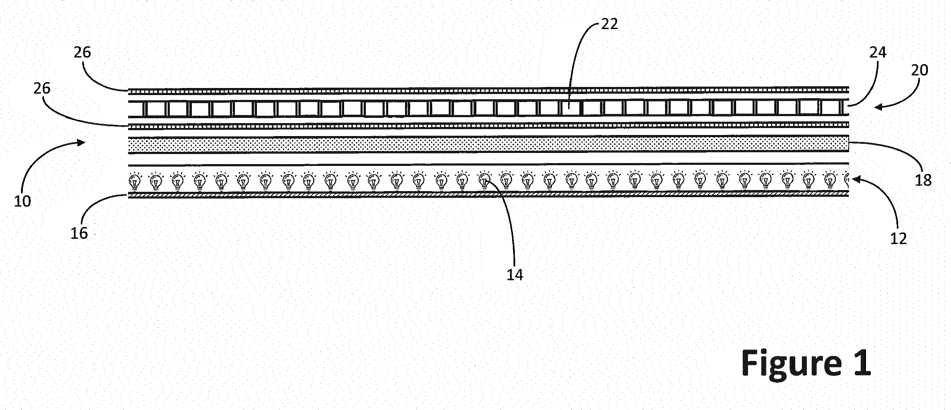

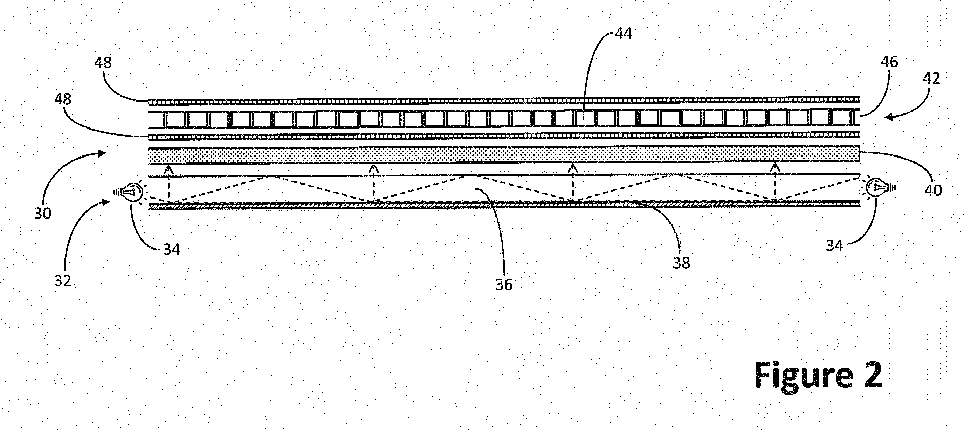

In an example to be described herein, a technique is provided by which to select a combination of component parts of a display, in particular of an open cell display panel, meeting required constraints on optical performance and, optionally, cost. Two simplified examples of a display type to which the technique to be described herein may be applied will firstly be described with reference to Figure 1 and to Figure 2.

Referring firstly to Figure 1, a schematic side view is provided of a section of display device 10 having a direct light backlight arrangement 12. As is known, the direct light backlight arrangement 12 has plural light sources 14 for emitting light. The light sources 14 may be for example discrete light-emitting diodes (LEDs) or elongate LED light bars. The light sources 14 are arranged typically in a regular array on a reflector panel 16. The light sources 14 emit light which is directed through a diffuser 18 to a display panel 20. The diffuser 18 helps to provide an even illumination to the display panel 20 by the plural discrete light sources 14 and may comprise for example a prism layer disposed between diffusive layers.

The display panel 20 is formed of or includes an array of display elements 22 (which are also often referred to as "pixels" as they typically correspond to pixels in the image that is to be displayed). The display elements 22 are individually controllable to transmit or prevent transmission of light from the light sources 14. In an LCD display panel 20, the display elements 22 are regions of a liquid crystal layer 24 placed between polarising layers 26. Each region of the liquid crystal layer 24 is in contact with a respective individually-addressable electrode of an electrode grid (not shown in Figure 1) on one face of the liquid crystal layer 24 and with a common electrode layer on an opposite face of the liquid crystal layer 24. When a voltage is applied across the respective region of the liquid crystal layer 24 between the addressable electrode and the common electrode, the angle of polarisation of light passing through that region of the liquid crystal layer 24 is rotated relative to the angle of polarisation of the polarising layers 26. In some example LCD displays, at least one of the polarising layers 26 may comprise a nano-wire grid polariser (NWGP) for example, having a higher level of light transmission than conventional polarisers.

Referring now to Figure 2, there is shown a schematic side view of a section of another example display device 30. This example has an edge-lit backlight arrangement 32. That is, there is at least one light source 34 which is arranged at or towards an edge of the display device 30. Commonly, there are light sources 34 arranged around each of the four edges of the display device 30. The light sources 34 are typically elongate and may be for example cold-cathode fluorescent lamps. In other examples, the light sources 34 located at the edges are plural LEDs arranged as LED light bars or other individual light sources arranged along the edges of the display device 30. The light sources 34 emit light into a light guide 36 which is mounted in front of a reflector 38. Light emerging from the light guide 36 passes through a diffuser 40 into a display panel 42. The display panel 42 has an array of individually controllable display elements 44 each comprising a region of a liquid crystal layer 44 placed between polarising layers 46, each region being in contact with an individually-addressable electrode of an electrode grid and a common electrode layer (not shown in Figure 2), as for the display panel 20 described above with reference to Figure 1.

Further component parts not shown in Figure 1 and Figure 2 may also be taken into consideration when selecting component parts for a display. For example, a power supply, electronics including processors and integrated circuits for controlling the display panel 20, 42, electronics including processors and integrated circuits for controlling the backlight arrangement 12, 32 and further optical layers including optical filters.

Each of the different component parts of the display, in particular the backlight arrangement 12, 32, the diffuser 18,40, the display panel 20, 42 and other components not shown in Figure 1 or Figure 2, may be selected from a respective set of available component parts from multiple different sources and with multiple different performance characteristics and costs. It is therefore generally a complex problem to a select a combination of component parts from the multiple variants available and to integrate the individually selected component parts to make a display or a part of a display that achieves a required level of performance within a required overall cost.

According to an example, each component part may be represented by one or more parameters defining the role of the component part in the overall operation of the display, or part of the display, and optionally by a cost parameter. These parameters may be assembled in a database from available data sources, including manufacturers' supplied product data. Constraints may be defined regarding not only an overall performance to be achieved, but also regarding the compatibility, for example, of subsets of component parts. For example, selection of one component part from its respective set may trigger a constraint on the possible selections from the respective set of another component part.

Overall performance constraints to be achieved by a selected combination may relate for example to:
- optical performance;
- power consumption;
- heat generation;
- expected overall probability of failure; and
- overall cost.

The application of any such constraints is enabled or inhibited by the availability of relevant parameters for use in representing the available variants of each component part. For example, if information on the heat generated by light sources 14, 34 is not easily available, then constraints relating to heat generation of an overall selection of component parts for a backlight arrangement may be omitted from consideration.

Other constraints may also be applied subject to the availability of relevant parameters, for example relating to manufacture of the combination, including performance measures relating to selected suppliers and ease of integration of particular selected combinations of component parts.

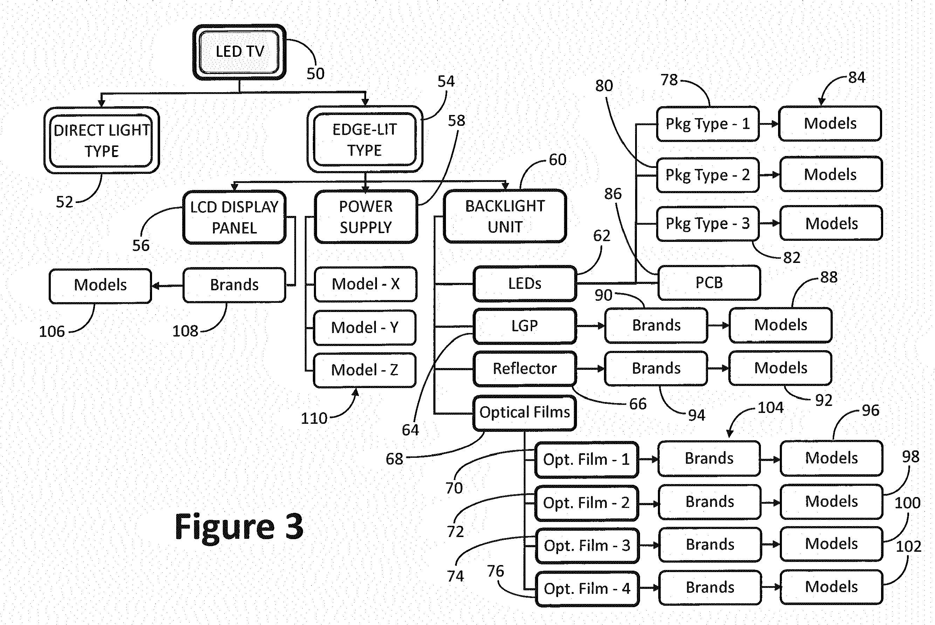

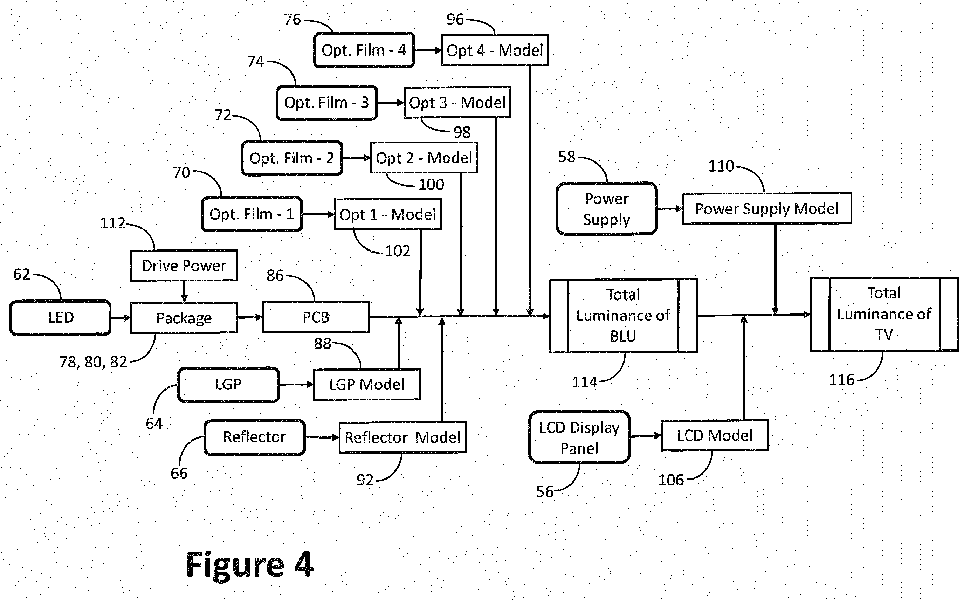

According to one example, a mixed integer linear programming (MILP) technique is applied to the problem of selecting an optimal combination of component parts satisfying defined overall performance constraints. An example application of the MILP technique will now be described with reference to Figure 3 and Figure 4 for selecting components parts from a structure of available parts. In this example, an MILP technique is applied to the selection of component parts for the backlight component 32 in an LED edge-lit TV display as described above with reference to Figure 2, subject to the constraint of achieving a predetermined level of display luminance.

Referring to Figure 3, a simplified example structure is shown for the components available for selection to make an LED-illuminated TV 50. The LED TV 50 may be of a direct light type 52, for example as described above with reference to Figure 1, or it may be of an edge-lit type 54, for example as described above with reference to Figure 2. Figure 3 shows an example structure of available options for each of three principal components of the edge-lit type of TV display 54: an LCD display panel 56; a power supply 58; and a backlight unit (BLU) 60.

In particular, Figure 3 shows an example structure of the available options for components of an edge-lit backlight unit 60. An edge-lit backlight unit 60 comprises four main component types: LED light bars 62; a light guide plate (LGP) 64; and one or more optical films 68, in this example four optical films 70, 72, 74 and 76. The LEDs component 62 may be packaged in three different variants 78, 80 and 82, each variant having a number of different models 84 available. The LEDs component 62 also comprises a printed circuit board (PCB) 86. The LGP component 64 is available in a number of different models 88 supplied under respective brands 90. Similarly, the reflector component 66 is available in a number of different models 92 supplied under respective brands 94. The optical film layers 1 to 4 (70-76) are each available in respective ranges of models 96-102 under respective brands 104.

The principal LCD panel component 56 is available in a number of different models 106 under respective brands 108 and the principal power supply component 58 is available in three different models 110.

Referring additionally to Figure 4, an example parametric modelling approach based upon the component availability structure shown in Figure 3 enables the application of an MILP technique to selecting a combination of components to make a backlight unit 60 for an LED edge-lit TV display, satisfying one or more predetermined constraints. One overall constraint to be satisfied in this example is the achievement of a predetermined level of display luminance.

For each of the components of an edge-lit BLU 60 - the LED bars 62, LGP 64, reflector 66 and optical film layers 70-76 - the inputs to the MILP algorithm are respective sets of parameter values and constraints. The parameter values represent features that may be used by the algorithm to select from and differentiate the various models available for each component, according to the availability structure shown in Figure 3. The constraints embody restrictions, for example relating to features of components that cannot be combined, or parameter ranges for one component which if selected would be incompatible with particular variants of another component or which define availability of models for use in particular combinations. Examples of parameters and constraints as may be assigned and input to an MILP algorithm comprising, for example, MILP software executing on a digital processor, will be described below.

The MILP algorithm may be executed to determine, as an output 114, the total luminance of the BLU 60 for each combination of parameters found to satisfy the defined constraints and to determine which combinations of parameters achieve the overall objective of the problem, that of achieving a predetermined level of display luminance. If found, determined combinations of parameters may be mapped back into the structure shown in Figure 3 to identify one or more specific combinations of component models. The overall objective may be expressed in terms not only of overall luminance but also in terms of parameters such as cost, and the MILP algorithm executed on that basis. Other constraints may be applied to enable a selection to be made from multiple solutions to whatever objective is set.

Examples of the parameters and constraints that may be input to the MILP algorithm for each BLU component are as follows.
1) For the LED light bar component 62, the available LED package types 78, 80, 82 may be classified according to their size and basic structural characteristics. Each LED package type has its own advantages and disadvantages in respect of power management, luminance output, packing, assembly and cost which vary between the available models 84 for each package type. Constraints may be defined for example to take account of the luminance output available from models 84 of LED package 78-82. A constraint may then be defined to relate, for example, an acceptable number of LEDs, and hence an acceptable luminance level, to the size of LCD display panel 56 to enable an LED package structure to be selected for a given size of LCD display panel 56 solely on the basis of the number of LEDs in the package.
   To calculate the constraint, measures of luminance output are made or otherwise obtained for LED packages having a basic structure differentiated by the number of LEDs in the package and measures of luminance output are taken. The luminance output that may be obtained when each basic structure is used to illuminate an LCD display panel of each available size is then calculated and the results collated in a data table. An acceptable range of luminance output is known for each size of LCD display panel 56 and the data table may be used to determine a corresponding acceptable range in the number of LEDs for each available size of LCD display panel 56 in all possible situations. A constraint may thus be defined and input to the MILP algorithm in the form of an availability table. The availability table indicates, with a binary '*1*', each of the available package structures of an LED bar 62, defined by number of LEDs, satisfying the luminance output constraint for a panel of each available size. A binary '0' indicates those structures that do not satisfy the constraint for each available size.
   To enable a selection from the available LED package structures, parameters to be defined and input to the MILP algorithm may comprise: the number of LEDs in the LED package; the power supply requirements of the package; and, optionally, its cost. The MILP algorithm may then consider only those LED package structures satisfying the luminance output constraint, given, as an input to the algorithm, the required size of the LCD display panel 56 and the number of LEDs in the package.
2) For the LGP component 64, a parameter table may be defined and input to the MILP algorithm based upon measurements of luminance gain made for each available model 88 of LGP 56 when used with a basic BLU structure created in a selected size of display panel. Similarly, for the reflector component 66, a parameter table may be defined and input to the MILP algorithm based upon measurements of luminance gain made for each available reflector model 92 when used with the basic BLU structure created in a selected size of display panel.
   Constraints may be defined and input for use by the MILP algorithm in selecting from the available models 88 of LGP 64 and from the available models 92 of reflector 66. These constraints recognise that models 88, 92 of the LGP 64 or the reflector 66 are not available for use with every available size of LCD display panel 56. Therefore, as for the available LED package structures 78-82, an availability table may be defined for each of the LGP component 64 and reflector component 66 and input to the MILP algorithm. The availability table indicates, with a binary '*1*', if a respective model 88, 92 is available for each available size of LCD display panel 56, and with a binary '0' if not.
   The MILP algorithm determines which of the available models 88, 92 satisfy the availability constraints for a given size of LCD display panel 56, and makes selections from those models 88, 92 based upon the respective luminance gain parameter tables when determining combinations of components satisfying the overall objectives of the problem relating to total BLU luminance and total TV display luminance.
3) For the optical film layers 68, in particular for optical film layers 1 to 4, it is recognised that different types of optical film act differently on light. Therefore, their use with each other is not always possible under all conditions. Use of different optical film types in a given optical film layer 68 results in different luminance gains. Furthermore, a given optical film type will result in a different luminance gain according which optical film layer 68 it is used in. The luminance gain resulting from a particular selection of optical film types therefore depends upon the particular selection of optical film types, the optical film layers 68 in which they are to be used and the size of the display panel.
   Constraints may be defined, in part to embody the experience of a designer, to restrict which types of optical film may be used together in a combination, and in what order, as optical film layers 1-4. The constraints may also express a restriction on the use of particular types of optical film, for example of prism sheets, in particular optical film layers, e.g. in optical film layer 4. These constraints may be defined and input to the MILP algorithm, as above, in the form of an availability table indicating, with a binary '*1*', if a respective optical film type may be used for each of the optical film layers 1-4, and with a binary '*0*' if not.
   For each optical film layer 1-4 a luminance gain data table may be defined by routine measurement as for the LEDs, LGP and reflector components above, taking account of the additional complications highlighted above, and input to the MILP algorithm. That is, for the basic BLU structure for each display panel size, the luminance contribution of each optical film type is measured separately when used in each of the optical film layers 1-4 and the results collated into respective parameter data tables providing the luminance gain resulting from the use of each optical film type in the optical film layer for each of the available sizes of LCD display panel 56.
   The MILP algorithm may then use the input constraints and parameters relating to the optical film layer component 68 to determine which optical film types may be used together to provide optical film layer components 1-4 (70-76) for a given size of LCD display panel 56 considering, optionally, the cost of each optical film type 96-102.
4) For the LCD display panel 56, parameters may be input to the algorithm defining the negative luminance gain of each of the available models 106 for each available size of the LCD display panel 56. While the LCD display panel component 56 is the most important component in the generation of an image, it does not contribute to the luminance achieved by the BLU components but, instead, reduces the total luminance of the display. The MILP algorithm may balance the total luminance output 114 of a particular combination of components of the BLU 60 with the negative luminance gain of each available model of LCD display panel 56 of a given size to achieve a required total display luminance 116. In achieving this balance, the MILP algorithm may be supplied with parameters defining the power supply capabilities of each of a number of available models 110 of the power supply component 58, together with the power requirements of the power-consuming components such as the LED component 62. Such parameters may be taken into account to select a suitable combination of a model 110 of power supply 58 to work with a combination of LED package structure 78-82, LGP model 88, reflector model 92, optical film layer combination 96-102 and LCD display panel model 106 to achieve an overall objective relating to total luminance of the TV display 116.

If one or more combinations of parameters are determined by the MILP algorithm satisfying all the defined constraints and achieving a required total luminance of the TV display 116, the determined parameters may be mapped back into the availability structure shown in Figure 3 to identify a particular combination of available component models satisfying the overall display luminance constraint and, optionally, an overall cost constraint.

To ensure that the MILP algorithm selects a combination of components, using the supplied parameter tables and constraints, that is 'realistic' for example in terms of technical compatibility or manufacture of the resultant assembly, further constraints may be defined and input to be taken into account by the MILP algorithm. For example, in practice, two different types of LED package would not be used with an LCD display panel 56, or two LPGs 64 would not be used together. Therefore, constraints as may also be defined on what is or is not a realistic design may include the following:
- Only one type of PCB 86 can be used for each design;
- Each LED bar 62 can only use one type of LED package 78-82;
- Each LED bar 62 can only consist of one LED supplier's package;
- Luminance of the BLU 60 should be equal to or greater than a critical level of Luminance;
- Prism on Prism (POP) optical films and Diffuser on Prism (DOP) optical films cannot be used together in one design;
- Upper Diffuser (UD) optical films and Bright Enhancement optical films cannot be used together in one design;
- An Upper Diffuser sheet cannot be used as the first optical film on a backlight unit;
- Brightness Enhancement optical films cannot be used as a first optical film layer on a backlight unit;
- If a Printed Diffuser (PD) sheet is to be used in a design, it must be the first optical film layer;
- Prism sheets cannot be used in last position in an optical film layer assembly;
- If smart Sheets (POP, DOP) are to be selected for a design, any kind of diffuser or brightness enhancement sheet should be used in an adjacent optical film layer as POP and DOP sheets cannot be used in a last position in an optical film layer assembly;
- Each design must have a Reflector 66 and only one reflector can be used for each design;
- Each design must have an LGP 64 and only one LGP can be used for each design;
- Each design must have a Power Supply board 58 and only one power supply board can be used for each design;

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method for selecting a combination of component parts for the manufacture of at least a part of a display system, each component part having one or more features relating to operation of the at least a part of a display system, the method comprising:
(i) defining values for parameters representing the one or more features of each component part;
(ii) defining one or more constraints relating to an objective to be achieved by a combination of component parts selected from respective sets of available component parts;
(iii) defining one or more constraints limiting the selection of a combination of two or more component parts; and
(iv) applying a linear programming algorithm to select a combination of parameter values satisfying the defined constraints, the selected parameter values representing a desired combination of component parts for the at least a part of a display system.

2. The method according to claim 1, wherein, at (ii), the one or more constraints are defined as a function of one or more parameters defined at (i).

3. The method according to claim 1 or claim 2, wherein, at (ii), the one or more constraints are defined as one or more respective threshold values.

4. The method according to any one of claims 1 to 3, wherein, at (iii), the one or more constraints define respective incompatibilities relating to the selection of one component part to work with another component part.

5. The method according to claim 4, wherein the one or more constraints are defined in the form of an availability table indicating valid and invalid combinations of values for two or more of the parameters defined at (i).

6. The method according to any one of claims 1 to 5, wherein, at (iv), the linear programming algorithm is a mixed integer linear programming (MILP) algorithm.

7. The method according to any one of claims 1 to 6, comprising:
(v) mapping a selected combination of parameter values from (iv) to the respective sets of available component parts to identify one or more combinations of component parts satisfying the one or more constraints defined at (ii).

8. The method according to claim 7, wherein the at least a part of the display is a backlight unit for a liquid crystal device (LCD) display panel and wherein the one or more constraints defined at (ii) define an overall luminance level to be achieved by the combination of the backlight unit and the LCD display panel.

9. The method according to claim 7 or claim 8, comprising:
(vi) assembling a combination of component parts identified at (v).

10. A display system, comprising a combination of component parts selected from respective sets of available component parts, the display system having a predetermined level of performance defined in terms of one or more operating parameters of the display system, each component part being represented by one or more parameter values defining features relating to operation of the display, wherein the combination of component parts is selected from the respective sets by:
(a) defining one or more constraints relating to the predetermined level of performance to be achieved by the selected combination of component parts;
(b) defining one or more constraints limiting the selection of a combination of two or more component parts; and
(c) applying a linear programming algorithm to select a combination of parameter values satisfying the defined constraints, the selected parameter values representing a combination of component parts for the display system achieving the predetermined level of performance.

11. The display system according to claim 10, wherein, at (b), the one or more constraints define respective incompatibilities relating to the selection of one component part to work with another component part.

12. The display system according to claim 11, wherein, at (b), the one or more constraints are defined in the form of an availability table indicating valid and invalid combinations of values for the parameters representing the two or more component parts.

13. The display system according to any one of claims 10 to 12, wherein a selected combination of parameter values from (c) is mapped to the respective sets of available component parts to identify one or more combinations of component parts satisfying the predetermined level of performance for the display system when assembled.

14. The display system according to any one of claims 10 to 13, comprising a backlight unit (60) for illuminating a liquid crystal device (LCD) display panel (56) and the predetermined level of performance comprises achievement of a predetermined level of display luminance to be achieved by the combination of the backlight unit (60) and the LCD display panel (56).

15. A computer program which when loaded into and executed by a digital processor causes the digital processor to implement the method according to any one of claims 1 to 9.
